# EUROPÄISCHE PATENTSCHRIFT

(11) **EP 2 401 169 B1**
(45) Veröffentlichungstag und Bekanntmachung des Hinweises auf die Patenterteilung: **19.12.2012**
(21) Anmeldenummer: 10705117.9
(22) Anmeldetag: 05.02.2010
(51) Int. Cl.: B60L 5/12, B60L 5/36

(54) **STROMABNEHMER UND ENERGIEÜBERTRAGUNGSSYSTEM**
CURRENT COLLECTOR AND ENERGY TRANSMISSION SYSTEM
COLLECTEUR DE COURANT ET SYSTÈME DE TRANSMISSION D'ÉNERGIE

(30) Priorität: 24.02.2009 DE 102009010122
(43) Veröffentlichungstag der Anmeldung: 04.01.2012
(73) Patentinhaber: Conductix-Wampfler GmbH, 79576 Weil am Rhein-Märkt (DE)
(72) Erfinder: SCHMIEDLE, Andreas, 79541 Lörrach (DE); ZUMBACH, Melchior, CH-5600 Lenzburg (CH)
(74) Vertreter: Wohlfarth, Ulrich
(86) Internationale Anmeldenummer: PCT/EP2010/051438
(87) Internationale Veröffentlichungsnummer: WO 2010/097278

(56) Entgegenhaltungen:
- DE-A1- 3 417 346
- DE-B- 1 026 776
- DE-C- 891 997

## Beschreibung

Die Erfindung betrifft einen Stromabnehmer nach dem Oberbegriff des Anspruchs 1 sowie ein Energieübertragungssystem nach dem Oberbegriff des Anspruchs 13.

Bekannte Energieübertragungssysteme in Form von Schleifleitungssystemen, wie sie beispielsweise aus der DE 196 47 336 A1 bekannt sind, weisen an einer Schleifleitung verfahrbare Vorrichtung auf, z.B. Leitungswagen oder Transportgehänge einer Elektrohängebahn. Diese Vorrichtungen tragen oft elektrische Verbraucher wie Antriebsmotoren zum Verfahren der verfahrbaren Vorrichtungen an der Schleifleitung. Zur Versorgung dieser elektrischen Verbraucher sind üblicherweise an einer oder mehren der verfahrbaren Vorrichtungen Stromabnehmer mit einem oder mehren Schleifkontakten vorgesehen, die in entsprechende spannungs- und stromführende längliche Leitungsstränge der Schleifleitung eingesetzt werden können. Die Stromabnehmer sind dort fest mit den verfahrbaren Vorrichtungen verbunden, lediglich die Kontaktierung der Schleifkontakte mit den Leitungssträngen ist bewegbar ausgeführt. Derartige Schleifleitungen werden üblicherweise in Fertigungsbetrieben verwendet, die in abgeschlossenen Gebäuden untergebracht sind. Auch andere Arten von Schleifleitungen können hierfür eingesetzt werden, beispielsweise aus dem Eisenbahnbereich bekannte Stromschienen- oder Oberleitungssysteme.

Es besteht nun zunehmend auch bei anderen Anlagen mit verfahrbaren Vorrichtungen der Wunsch, Schleifleitungssysteme zur Versorgung von elektrischen Verbrauchern auf den Vorrichtungen einzusetzen, beispielsweise bei Verladekränen für Container oder RTG-Krananlagen. Dort erfolgt die Versorgung von auf den Kränen angeordneten Verbrauchern üblicherweise über lange Leitungen, welche von an den Kränen montierten Leitungstrommeln beim Fahren auf- und abgewickelt werden. Ein Beispiel für eine derartige Leitungstrommelanordnung zeigt die DE 44 29 268 A1. Um dort den Kran verfahren zu können, wird die Versorgungsleitung von der am Kran angeordneten Leitungstrommel entsprechend der Bewegung des Verladekrans ab- bzw. aufgerollt. Diese bekannte Technik den Nachteile auf, dass die auf- bzw. abgerollte Leitung am Boden abgelegt werden muss, ohne große Zugkräfte in die Leitung einzuleiten. Zu dem besteht dort die Gefahr, dass sich die Leitung beim Auf- oder Abwickeln verheddert, so dass der Kran nicht mehr weiterfahren kann. Bei derartigen Krananlagen mit RTG-Kränen (Rubbered Tyered Gantry) können die mit Gummibereifung versehenen und mit Verbrennungsmotoren als Fahrantrieb ausgestatteten RTG-Kräne frei in alle Richtungen verfahren werden. Im normalen Verladebetrieb verfahren die RTG-Kräne in Längsgassen zwischen Containerverladeplätzen und sortieren und verladen die Container in diesen Verladeplätzen. Zum schnellen Umsetzen von Containern in einem vollen Verladeplatz werden oft RTG-Kräne von momentan leeren oder nur schwach gefüllten Verladeplätzen abgezogen und verbrennungsmotorisch zum vollen Verladeplatz gefahren. Die elektrische Anbindung des RTG-Krans muss am leeren Verladeplatz abgekoppelt und am vollen Verladeplatz wieder angekoppelt werden, was umständlich, gefährlich und zeitraubend ist. Zudem ist das Verfahren der RTG-Kräne mit Verbrennungsmotoren umweltschädlich und wegen der steigenden Kraftstoffpreise immer teuerer, so dass für das Verfahren in den Längsgassen elektrische Antriebe vorgesehen werden sollen, während die Verbrennungsmotoren lediglich für das freie Verfahren zwischen den Längsgassen verwendet werden sollen.

Es besteht deshalb insbesondere im Bereich der Krananlagen der Wunsch, die elektrischen Verbraucher auf dem Kran über eine Schleifleitung mit elektrischer Energie zu versorgen. Da es sich bei derartigen Kränen jedoch um sehr große und in der Regel im Freien eingesetzte und somit ungünstigen Umgebungsbedingungen ausgesetzte Anlagen handelt, müssen Bewegungen des Krans möglichst gut von Bewegungen eines an der Schleifleitung verfahrenbaren, mit dem Kran verbundenen Stromabnehmerwagens voneinander entkoppelt werden.

Ein Ansatz für diese Entkopplung findet sich im Bereich der schienengebundenen elektrischen Fahrzeug, beispielsweise Elektrolokomotiven, bei denen üblicherweise auf dem Dach der Lokomotive montierte Einholm- oder Scherenstromabnehmer ein Schleifstück an eine Oberleitung andrücken kann. Für die Versorgung der Fahrzeuge mit elektrischer Energie ist es dort besonders wichtig, dass das Schleifstück dauerhaft an der Oberleitung anliegt und auch bei bewegungsinduzierten Schwingungen dort sicher anliegt. Die Stromabnehmer werden deshalb so ausgebildet, dass ein Anpressmechanismus das Schleifstück sicher in Richtung der Oberleitung anpresst. Es wird demzufolge beständig eine Kraft in Richtung der Oberleitung aufgebracht.

Einen Einsatz derartiger Scherenstromabnehmer bei Kranen offenbart die DE 739 960 A. Dort ist ein Doppellenker-Stromabnehmer mit einer Grundplatte versehen, an der über eine Doppellenkeranordnung mit oberen und unteren Lenkerpaaren ein Schleifschuh zur Führung entlang einer Stromschiene angeordnet ist. Die beiden unteren Lenker sind über eine Parallelführung so miteinander verbunden, dass deren oberen Gelenkpunkte stets gleichförmige Bewegungen machen und bei denen der Anpressdruck für den Schleifschuh durch eine im wesentlichen parallel zum Schleifschuh zwischen den oberen Lenkern angeordnete Zugfeder erzeugt wird. Ein Verstellantrieb zum Ein- und Ausfahren des Schleifschuhs ist dort nicht vorgesehen.

Eine derartige Lösung erweist sich bei Schleifleitungs-Stromabnehmerwagen, welche an einer Führung längs einer Schleifleitung geführt werden, als sehr nachteilig. So muss einerseits beständig eine Kraft quer zur Fahrtrichtung, als quer zur Längserstreckung der Schleifleitung aufgebracht werden, was einen höheren Energiebedarf im Betrieb zur Folge hat. Zudem führen die ständigen Anpresskräfte quer zur Fahrtrichtung zu erhöhter Reibung zwischen Stromabnehmerwagen und Schleifleitung, was zu einer weiteren Erhöhung des Energiebedarfs führt. Das Verfahren des Stromabnehmerwagens entlang der Schleifleitung ist somit mit einem deutlich erhöhten Kraft- und Energieaufwand verbunden. Darüber hinaus besteht durch das beständige Anpressen des Stromabnehmerwagens quer zur Fahrtrichtung die Gefahr, dass die empfindliche Kontaktierung zwischen Schleifkontakten und Leitungssträngen der Schleifleitung beschädigt wird. Sollen die verfahrbaren Vorrichtungen zusätzlich noch zwischen mehreren Schleifleitungen an unterschiedlichen Stellen verfahren werden, wie z.B. RTG-Kräne, so besteht hierbei Beschädigungsgefahr aufgrund der überstehenden Pantographen.

Einen weiteres, mit obigen Nachteilen behaftetes Energieübertragungssystem und einen weiteren Stromabnehmer mit den Merkmalen des Oberbegriffs des Anspruchs 1 offenbart die DE 891 997 in Form eines Scherenstromabnehmers mit einem aus zwei Scherenarmen bestehenden Traggestänge für das Schleifstück und einer das Ausschwenken des Schleifstücks um den einen oder den anderen Scherenarm zulassenden Lenkerverbindung.

Weitere nachteilige Stromabnehmer und Stromabnehmersysteme gehen auch aus der DE 1 026 776 oder der DE 34 17 346 A1 hervor.

Es ist deshalb Aufgabe der vorliegenden Erfindung, die oben genannten Nachteile zu überwinden und einen Stromabnehmer sowie ein Energieübertragungssystem bereitzustellen, die ein energiesparendes, kontaktsicheres und beschädigungsfreies Verfahren des Stromabnehmers entlang einer Schleifleitung sowie ein einfaches Verbinden des Stromabnehmers mit der Schleifleitung ermöglichen. Insbesondere sollen während des Verfahrens des Stromabnehmers an der Schleifleitung nur geringe Querkräfte zwischen Stromabnehmer und Schleifleitung auftreten.

Diese Aufgabe löst die Erfindung durch einen Stromabnehmer mit den Merkmalen des Anspruchs 1 sowie ein Energieübertragungssystem mit den Merkmalen des Anspruchs 13. Weitere Ausführungen der Erfindung sind in den untergeordneten Ansprüchen angegeben.

Der eingangs genannte Stromabnehmer sowie das eingangs genannte Energieübertragungssystem mit mindestens einer ersten Hebelanordnung zwischen Stromabnehmerwagen und verfahrbarer Vorrichtung mit einem ersten Antriebshebelarm, dessen erstes Ende drehbar mit der verfahrbaren Vorrichtung verbindbar und dessen zweites Ende drehbar mit einem zweiten Ende mindestens eines ersten Zughebelarms verbunden ist, dessen erstes Ende drehbar mit dem Stromabnehmerwagen verbunden ist, wobei ein erster Verstellantrieb vorgesehen ist, um den Stromabnehmerwagen zwischen einer eingefahrenen Position an der verfahrbaren Vorrichtung und einer ausgefahrenen Position entfernt der verfahrbaren Vorrichtung bewegen zu können, sind erfindungsgemäß dadurch gekennzeichnet, dass eine erste Feststellvorrichtung vorgesehen ist, um den ersten Antriebshebelarm beim Verfahren der verfahrbaren Vorrichtung in Fahrtrichtung in einer vorgegebenen ausgefahrenen Position festzustellen. Hierdurch wird vorteilhaft erreicht, dass der Stromabnehmerwagen von der verfahrbaren Vorrichtung über den ersten Zughebelarm gezogen wird und nur geringe Querkräfte, also quer zur Fahrtrichtung, auf den Stromabnehmerwagen und die Schleifleitung wirken. Vorteilhaft wird der erste Antriebshebelarm möglichst steil, also so weit wie möglich quer zur Fahrtrichtung hin festgestellt, so dass der Winkel zwischen erstem Zughebelarm und der Fahrtrichtung möglichst klein wird. Selbst wenn die verfahrbare Vorrichtung nicht exakt parallel, sondern mit Abweichungen zum Führungselement verfährt, ermöglich der erfindungsgemäße Stromabnehmer und Energieübertragungssystem eine sichere Verbindung mit der Schleifleitung. Der erste Verstellantrieb kann alternativ auch zwischen der verfahrbaren Vorrichtung und dem ersten Zughebelarm angeordnet sein, um den ersten Zughebelarm in seinem Abstand von der verfahrbaren Vorrichtung festzustellen.

In einer vorteilhaften Ausführung der Erfindung ist eine zweite Hebelanordnung mit einem zweiten Antriebshebelarm vorgesehen, dessen erstes Ende drehbar mit der verfahrbaren Vorrichtung verbindbar und dessen zweites Ende drehbar mit einem zweiten Ende mindestens eines zweiten Zughebelarms verbunden ist, dessen zweites Ende drehbar mit dem Stromabnehmerwagen verbunden ist, wobei die erste Hebelanordnung und die zweite Hebelanordnung in einer Pantographenanordnung zueinander angeordnet sind. Hierdurch kann die Führung des Stromabnehmerwagens beim Ein- und Ausfahren einfach durchgeführt werden.

Ist in einer vorteilhaften Weiterbildung dieser Ausführung eine zweite Feststellvorrichtung vorgesehen, um den zweiten Antriebshebelarm beim Verfahren der Vorrichtung entgegen der Fahrtrichtung in einer vorgegebenen ausgefahrenen Position festzustellen, so kann der Stromabnehmerwagen beim Fahren in Fahrtrichtung vom ersten Zughebelarm und auch beim Fahren entgegen der Fahrtrichtung vom zweiten Zughebelarm gezogen werden. Gegenüber der obigen Ausführung nur mit der ersten Feststellvorrichtung, bei der beim Fahren entgegen der Fahrtrichtung der Stromabnehmerwagen geschoben wird, weist dies den Vorteil auf, dass ein evtl. Verkannten des Stromabnehmerwagens beim Schieben entgegen der Fahrtrichtung vermieden werden kann. Vorteilhaft wird auch hier der zweite Antriebshebelarm möglichst steil, also so weit wie möglich quer zur Fahrtrichtung hin festgestellt, so dass der Winkel zwischen zweitem Zughebelarm und der Fahrtrichtung möglichst klein wird.

Durch einen zweiten Verstellantrieb zwischen der verfahrbaren Vorrichtung und dem zweiten Antriebshebelarm kann das Ein- und Ausfahren des Stromabnehmerwagens exakt und insbesondere symmetrisch gesteuert erfolgen. Der zweite Verstellantrieb kann alternativ auch zwischen der verfahrbaren Vorrichtung und dem zweiten Zughebelarm angeordnet sein, um denn zweiten Zughebelarm in seinem Abstand von der verfahrbaren Vorrichtung festzustellen. Alternativ kann der erste Verstellantrieb vorteilhaft auch zwischen dem ersten Antriebshebelarm und dem zweiten Antriebshebelarm angeordnet sein.

In einer betriebstechnisch günstigen Ausgestaltung der Erfindung können der erste und/oder der zweite Verstellantrieb ein Pneumatikzylinder und/oder Hydraulikzylinder sein. In dieser Ausführung können der Pneumatik- und/oder Hydraulikzylinder als erste und/oder zweite Feststellvorrichtung ausgebildet sein, was zu einer einfachen Ausgestaltung der Feststellvorrichtung führt.

In einer weiteren Ausführung der Erfindung ist als erste Feststellvorrichtung ein an der verfahrbaren Vorrichtung und am ersten Antriebshebelarm angeordnetes erstes flexibles Zugelement, beispielsweise in Form eines Seils, eines Bands, einer Kette o.ä. vorgesehen, welches bei ausgefahrenem ersten Antriebshebelarm und Verfahren des Stromabnehmers in Fahrtrichtung gespannt wird und somit den Stromabnehmerwagen zieht. Das Zugelement überträgt nur Zugkräfte und keine Druckkräfte. In einer vorteilhaften Weiterbildung dieser Ausführung ist als zweite Feststellvorrichtung ein an der verfahrbaren Vorrichtung und am zweiten Antriebshebelarm angeordnetes zweites flexibles Zugelement vorgesehen, welches bei ausgefahrenem zweiten Antriebshebelarm und Verfahren des Stromabnehmers entgegen der Fahrrichtung gespannt wird und somit den Stromabnehmerwagen zieht. Diese wie auch die nachstehend angegebene Ausführung der Erfindung weisen den Vorteil auf, dass während des Fahrens der verfahrbaren Vorrichtung die Verstellantriebe abgeschaltet werden können und somit keine Energie benötigen.

Eine weitere Ausführung der Erfindung kann vorsehen, dass als erste und/oder zweite Feststellvorrichtung ein am ersten Antriebshebelarm angeordneter erster Anschlag bzw ein am zweiten Antriebshebelarm angeordneter zweiter Anschlag vorgesehen sind, der oder die beim Erreichen der vorgegebenen ausgefahrenen Position des jeweiligen Antriebshebelarms an der verfahrbaren Vorrichtung anschlagen. Diese Ausführung lässt sich einfach verwirklichen und ermöglicht ein einfaches Feststellen des oder der Antriebshebelarme.

Vorteilhaft wird das erfindungsgemäße Energieübertragungssystem derart betrieben, dass zuerst der Stromabnehmerwagen mittels des oder der Verstellantriebe von einer Ruhestellung an der verfahrbaren Vorrichtung quer zur Fahrtrichtung zum Führungselement der Schleifleitung hin ausgefahren wird, anschließend die verfahrbare Vorrichtung in Fahrtrichtung verfahren wird, bis die Feststellvorrichtung den ersten Antriebshebelarm in einer vorgegebenen ausgefahrenen Position feststellt, und dann die der oder die Verstellantriebe abgeschaltet werden.

Vorteilhafte Ausführungen und zweckmäßige Weiterbildungen der Erfindung werden nun anhand bevorzugter Ausführungsbeispiele mit Bezug auf die begleitenden Zeichnungen detailliert beschrieben. Diese zeigen:
- **Fig. 1**: eine schematische Draufsicht auf eine erste Ausführung eines erfindungsgemäßes Energieübertragungssystem mit einem erfindungsgemäßen Stromabnehmer in einer Ruheposition;
- **Fig. 2**: die Darstellung aus Fig. 1 mit dem Stromabnehmer in ausgefahrener Position;
- **Fig.3**: die Darstellung aus Fig. 1 und 2 nach dem Anfahren des verfahrbaren Verbrauchers;
- **Fig. 4**: die Darstellung aus Fig. 1 bis 3 während des Fahrens des verfahrbaren Verbrauchers;
- **Fig. 5**: eine schematische Draufsicht auf eine zweite Ausführung eines erfindungsgemäßes Energieübertragungssystems mit einem erfindungsgemäßen Stromabnehmer in einer Ruheposition;
- **Fig. 6**: die Darstellung aus Fig. 5 mit dem Stromabnehmer in ausgefahrener Position;
- **Fig. 7**: die Darstellung aus Fig. 5 und 6 nach dem Anfahren des verfahrbaren Verbrauchers;
- **Fig. 8**: die Darstellung aus Fig. 5 bis 7 während des Fahrens des verfahrbaren Verbrauchers;
- **Fig. 9**: eine schematische Draufsicht auf eine dritte Ausführung eines erfindungsgemäßes Energieübertragungssystems mit einem erfindungsgemäßen Stromabnehmer in einer Ruheposition;
- **Fig. 10**: die Darstellung aus Fig. 9 mit dem Stromabnehmer in ausgefahrener Position;
- **Fig. 11**: die Darstellung aus Fig. 9 und 10 nach dem Anfahren des verfahrbaren Verbrauchers;
- **Fig. 12**: die Darstellung aus Fig. 9 bis 11 während des Fahrens des verfahrbaren Verbrauchers;
- **Fig. 13**: eine schematische Draufsicht auf eine vierte Ausführung eines erfindungsgemäßes Energieübertragungssystems mit einem erfindungsgemäßen Stromabnehmer in einer Ruheposition;
- **Fig. 14**: die Darstellung aus Fig. 13 mit dem Stromabnehmer in ausgefahrener Position;
- **Fig. 15**: die Darstellung aus Fig. 13 und 14 nach dem Anfahren des verfahrbaren Verbrauchers;
- **Fig. 16**: die Darstellung aus Fig. 13 bis 15 während des Fahrens des verfahrbaren Verbrauchers;

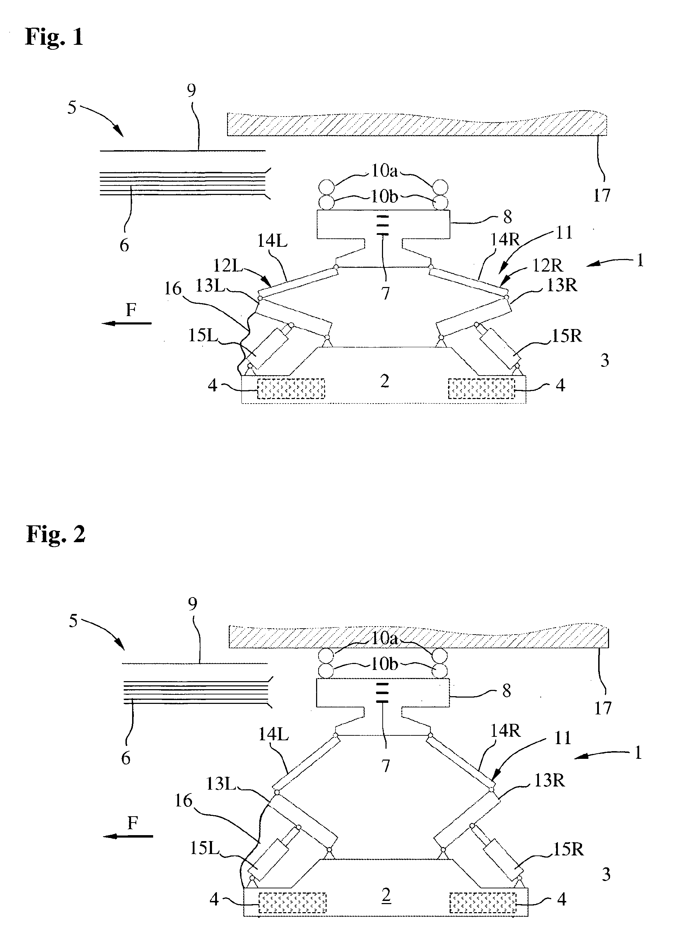

Fig. 1 zeigt eine schematische Draufsicht auf eine erste Ausführung eines erfindungsgemäßen Energieübertragungssystems mit einem erfindungsgemäßen Stromabnehmer 1 in einer Ruheposition.

Der Stromabnehmer 1 ist an einem Fahrfuß eines Krans 2 befestigt, der auf einem Boden 3 in und entgegen einer Fahrtrichtung F mittels eines elektrischen Fahrantriebs verfahrbar ist. In den Zeichnungen wird der Kran 2 auf zeichnerisch angedeuteten Gummireifen 4 auf dem Boden 3 verfahren.. Bei dem Kran 2 kann es sich um einen Containerverladekran oder RTG-Kran handeln.

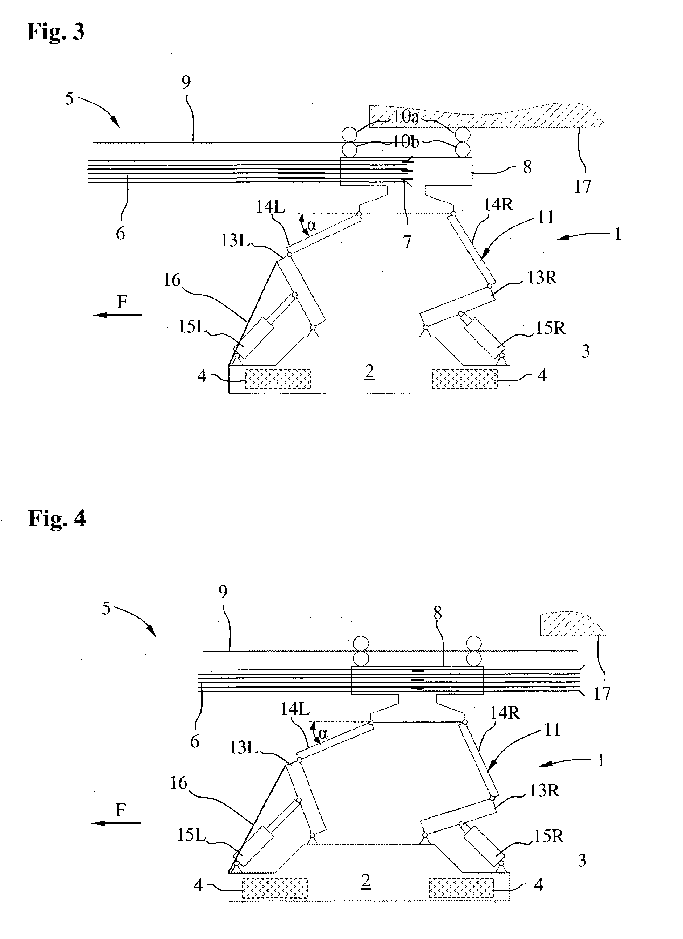

Um den Kran 2 über den Stromabnehmer 1 mit elektrischer Energie zu versorgen, ist eine an sich bekannte Schleifleitung 5 vorgesehen. Die Schleifleitung 5 weist eine Vielzahl von spannungs- bzw. stromführenden Leitungssträngen 6 auf, welche nur in Fig. 1 bis 4 angedeutet sind. In den Fig. 3 und 4 greifen in bekannter Weise Schleifkontakte 7 eines Stromabnehmerwagens 8 des Stromabnehmers 1 von oben in die Leitungsstränge 6 ein, um den Kran mit elektrischer Energie zu versorgen. Ein Beispiel für eine derartige Energieübertragung mittels Schleifleitung geht aus der DE 196 47 336 A1 hervor, auf die bezüglich der Ausgestaltung der elektrischen Kontaktierung zwischen Leitungssträngen 6 und Schleifkontakten 7 Bezug genommen wird.

Wie aus Fig. 3 und 4 ersichtlich, wird der Stromabnehmerwagen 8 im Fahrbetrieb an einem entlang der Schleifleitung 5 angeordneten, als Führungsschiene 9 ausgebildeten Führungselement mittels Führungsrollen 10 seitlich, also quer zur Fahrtrichtung F des Stromabnehmerwagens 8, geführt. Die Führungsrollen 10 weisen hierzu äußere Führungsrollen 10a und innere Führungsrollen 10b auf, welche in Betriebsposition (Fig. 3 und 4) die Führungsschiene 9 umgreifen. Anstelle der Führungsschiene 9 kann aber auch ein anderes geeignetes Führungselement vorgesehen werden, wie auch die Führungsrollen 10 am Stromabnehmerwagen 8 durch andere geeignete Führungsmittel ersetzt werden können, um den Stromabnehmerwagen 8 längs der Schleifleitung 5 seitlich zu führen.

Anstelle der in den vorliegenden Ausführungsbeispielen beschriebenen Schleifleitung können aber auch andere Arten von entsprechenden Energieübertragungssystemen eingesetzt werden, beispielsweise an sich bekannte Stromschienensysteme oder an Stromleitungen geführte Stromabnehmer. Maßgeblich ist vorliegend, dass der Stromabnehmerwagen 8 an einem Führungselement entlang des Energieübertragungssystems geführt wird.

Da der Kran 2 neben dem elektrischen Fahrantrieb auch über einen verbrennungsmotorischen Fahrantrieb, z.B. einen Dieselmotor, verfügt, kann der Kran 2 in der in Fig. 1 und 2 gezeigten Parkposition auch ohne Verbindung des Stromabnehmers 1 mit der elektrischen Schleifleitung 5 verfahren. Anstelle eines Verbrennungsmotors für die Fahrten ohne Verbindung zur Schleifleitung 5 kann vorteilhaft auch eine Pufferbatterie für den elektrischen Fahrantrieb vorgesehen werden, um diese kurze Fahrstrecke zu überbrücken.

Um den Stromabnehmerwagen 8 von der in Fig. 1 gezeigten eingefahrenen Position in die in Fig. 2 gezeigte ausgefahrene Position verfahren zu können, ist eine Pantographenanordnung 11 mit einer in Fig. 1 linken, ersten Hebelanordnung 12L und einer in Fig. 1 rechten, zweiten Hebelanordnung 12R vorgesehen. Im weiteren bezieht sich der an die Bezugsziffern angefügt Buchstabe "L" auf die linke, erste Hebelanordnung 12L und der Buchstabe "R" auf die rechte, zweite Hebelanordnung 12R.

Die erste Hebelanordnung 12L weist einen ersten Antriebshebelarm 13L auf, der mit einem ersten Ende drehbar am Kran 2 angelenkt ist. Mit seinem anderen, zweiten Ende ist der erste Antriebshebelarm 13L drehbar mit einem zweiten Ende eines ersten Zughebelarms 14L verbunden. Das andere, erste Ende des ersten Zughebelarms 14L ist drehbar im linken Bereich des Stromabnehmerwagens 8 angelenkt. Die erste Hebelanordnung 12L ist dabei so ausgebildet, dass die ersten Enden des ersten Antriebshebelarms 13L und ersten Zughebelarms 14L in der in Fig. 1 gezeigten Park- oder Ruheposition in Fahrtrichtung F hinter bzw. rechts von den verbundenen zweiten Enden des ersten Antriebshebelarms 13L und ersten Zughebelarms 14L zu liegen kommen.

Die zweite Hebelanordnung 12R ist im wesentlichen symmetrisch zur ersten Hebelanordnung 12L ausgebildet und weist einen zweiten Antriebshebelarm 13R auf, der mit einem ersten Ende drehbar am Kran 2 angelenkt ist. Mit seinem anderen, zweiten Ende ist der zweie Antriebshebelarm 13R drehbar mit einem zweiten Ende eines zweiten Zughebelarms 14R verbunden. Das andere, zweite Ende des zweiten Zughebelarms 14R ist drehbar im rechten Bereich des Stromabnehmerwagens 8 angelenkt. Die zweite Hebelanordnung 12L ist dabei so ausgebildet, dass die ersten Enden des zweiten Antriebshebelarms 13L und zweiten Zughebelarms 14L in der in Fig. 1 gezeigten Park- oder Ruheposition in Fahrtrichtung F vor bzw. links von den verbundenen zweiten Enden des zweiten Antriebshebelarms 13L und zweiten Zughebelarms 14L zu liegen kommen.

Der erste Antriebshebelarm 13L kann mittels eines ersten Verstellantriebs 15L, hier ein steuerbarer Pneumatikzylinder, um seine Drehgelenkverbindung mit dem Kran 2 zwischen den in Fig. 1 und Fig. 2 gezeigten Positionen hin und her bewegt werden. Gleichermaßen kann der zweite Antriebshebelarm 13R mittels eines zweiten Verstellantriebs 15L, der ebenfalls als steuerbarer Pneumatikzylinder ausgebildet ist, um seine Drehgelenkverbindung mit dem Kran 2 zwischen den in Fig. 1 und Fig. 2 gezeigten Positionen hin und her bewegt werden.

Der erste und zweite Antriebshebelarm 13L und 13R und/oder die Verstellantriebe 15L, 15R können vorteilhaft anstelle am Kran 2 auch drehbar an einem Grundelement angelenkt sein, dass dann seinerseits am Kran 2 befestigt wird.

In den in den Fig. 1 bis 16 gezeigten Ausführungsbeispielen stehen die Drehachsen der Drehgelenkverbindungen senkrecht auf der Zeichnungsebene respektive dem Boden, die Bewegung der Hebelarme und Pneumatikzylinder erfolgt also parallel zur Zeichnungsebene. Dies ist fertigungs- und betriebstechnisch von Vorteil, die Bewegungen können jedoch auch in anderen Ebenen verlaufen, solange eine saubere und definierte Positionierung des Stromabnehmerwagens 8 an die Führungsschiene 9 der Schleifleitung 5 und eine sichere Kontaktierung der Schleifkontakte 7 in den Leitungssträngen 6 sichergestellt ist.

Um im Fahrbetrieb des Krans 2 in Fahrtrichtung F die Querkräfte auf die Schleifleitung 5 und die Führungsschiene 9 zu minimieren, ist zwischen dem in Fig. 1 linken und in Fahrtrichtung F vorderen Ende des Krans 2 und dem zweiten Ende des ersten Antriebshebelarms 13L eine als Seil 16 ausgebildete Feststellvorrichtung für den ersten Antriebshebelarm 13L befestigt. Die Funktion dieses Seils 16 wird nachfolgend anhand von Fig. 1 bis 4 im Detail erläutert.

In Fig. 1 befindet sich der Kran 2 samt Stromabnehmer 1 in einer Ruhe- oder Parkposition ohne elektrische Verbindung zur Schleifleitung 5. In dieser Stellung wird der Kran 2 ausschließlich mit dem Verbrennungsmotor verfahren, die Pneumatikzylinder 15L, 15R mit von dem Verbrennungsmotor erzeugten Druckluft oder Druckluft aus einem Speicher betrieben. Eine am Kran angeordnete elektronische und/oder elektrische Steuerung kann über eine Pufferbatterie betrieben werden.

Soll nun der Kran 2 aus der Ruhestellung in Fig. 1 in Betrieb gehen und entlang der Schienenanordnung 3 verfahren werden, so werden zunächst die beiden Pneumatikzylinder 15L, 15R ausgefahren, wodurch die zweiten Enden der Antriebshebelarme 13L, 13R zueinander bewegt werden. Aufgrund des Pantographenprinzips werden die zweiten Enden der ersten Zughebelarme 14L, 14R ebenfalls zueinander bewegt und somit ihre ersten Enden quer zur Fahrtrichtung F in Richtung einer ortsfesten, im Wesentlichen parallel zur Schleifleitung 5 und Führungsschiene 9 verlaufenden Anschlagsfläche 17 ausgefahren. Somit wird auch der Stromabnehmerwagen 8 zu Anschlagsfläche 17 hin bewegt, bis die äußeren Führungsrollen 10a daran anschlagen. Der Stromabnehmer 1 befindet sich nun in der in Fig. 2 gezeigten ausgefahrenen Position. Das Seil 16 ist noch nicht gespannt.

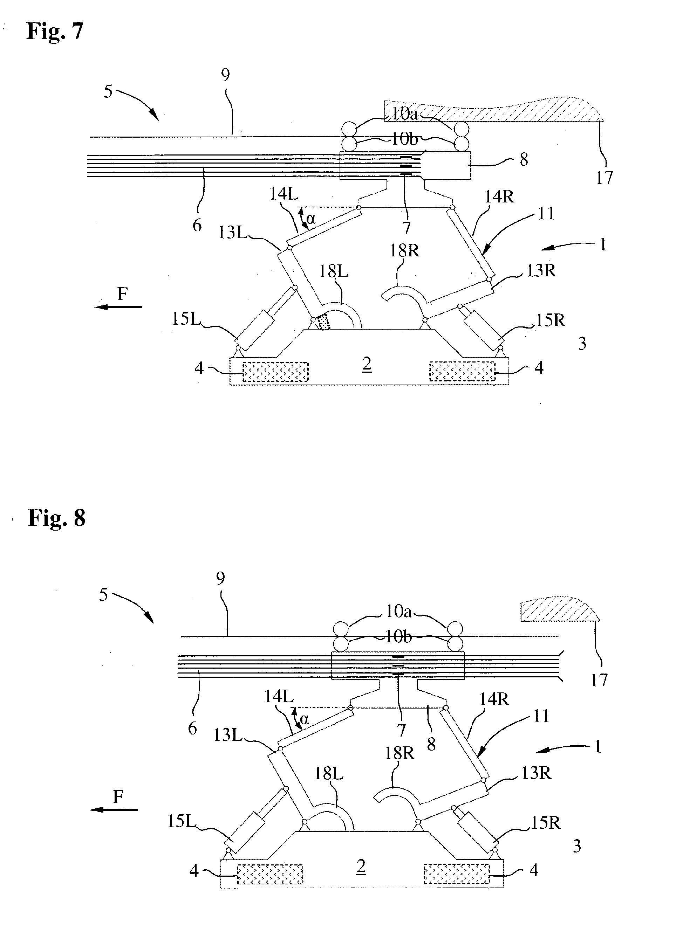

Anschließend fährt der Kran 2 verbrennungsmotorisch in Fahrtrichtung F zur Schleifleitung 5 hin, so dass zunächst die linken Führungsrollen 10a, 10b die Führungsschiene 9 umgreifen, wie in Fig. 7 dargestellt. Dann wird auch über die Schleifkontakte 7 die Verbindung zu den Leitungssträngen 6 hergestellt, so dass der elektrische Fahrantrieb nun durch die Schleifleitung versorgt werden kann. Um möglichst viel Energie einsparen zu können, werden beim Losfahren aus der in Fig. 2 gezeigten Position nach links die Pneumatikzylinder 15L und 15R drucklos geschaltet, so dass keine Anpresskraft den Stromabnehmerwagen 8 an die Anschlagsfläche 17 drückt und somit nur geringe, reibungsbedingte Querkräfte in Richtung der Schleifleitung 5 wirken.

Alternativ kann es vorteilhaft sein, die Pneumatikzylinder 15L, 15R solange mit Druck zu beaufschlagen, bis zumindest die vorderen, in Fig. 1 linken Führungsrollen 10a, 10b die Führungsschiene 9 umgreifen. Als sicherste Alternative können die Pneumatikzylinder 15L, 15R solange mit Druck beaufschlagt werden, bis auch die in Fig. 1 rechten Führungsrollen 10a, 10b die Führungsschiene 9 umgreifen.

Aufgrund der drucklosen Pneumatikzylinder 15L, 15R, der Reibungskräfte vor allem zwischen Führungsrollen 10a und Anschlagsfläche 17 sowie der Trägheit des Stromabnehmers 1 knickt die Pantographenanordnung 11 beim Losfahren zunächst entgegen der Fahrtrichtung F nach rechts ein, wie in Fig. 3 erkennbar. Dadurch, dass sich das Seil 16 nun spannt, wird jedoch ein weiteres, vollständiges Einknicken der Pantographenanordnung 11 verhindert. Aufgrund der entgegen der Fahrtrichtung F wirkenden Kräfte, insbesondere der Reibungskräfte, sowie des gespannten Seils 16 wird der erste Antriebshebelarm 13L in seiner in Fig. 3 gezeigten Position festgestellt und an einer weiteren Drehung im Uhrzeigersinn gehindert. Die vom verfahrenden Kran 2 auf den Stromabnehmerwagen 8 ausgeübten Kräfte werden nun über den ersten Zughebelarm 14L auf den Stromabnehmerwagen 8 übertragen, so dass die Pantographenanordnung 11 beim weiteren Verfahren (Fig. 4) in dieser Position verbleibt.

Um Querkräfte quer zur Fahrtrichtung F auf den Stromabnehmer 8 möglichst klein zu halten, ist es deshalb vorteilhaft, dass der in Fig. 3 gezeigte Winkel α zwischen dem ersten Zughebelarm 14L und der Führungsschiene 9 bzw. einer dazu parallelen Gerade durch das Drehgelenk zwischen Stromabnehmerwagen 8 und erstem Zughebelarm 14L möglichst klein ist. Der erste Zughebelarm 14L dient somit in erster Linie als Zugelement, um den durch die Führungsrollen 10a, 10b und die Führungsschiene 9 seitlich und somit in Querrichtung geführten Stromabnehmerwagen 8 in Fahrtrichtung zu ziehen. Es werden somit im Wesentlichen nur Zugkräfte auf den Stromabnehmerwagen 8 übertragen, während Querkräfte in Richtung vom Kran 2 weg oder zu ihm hin minimiert werden. Dies weist sich als deutlicher Vorteil gegenüber herkömmlichen Pantographen-Stromabnehmern, da u.a. die Verbindung zwischen den Leitungssträngen 6 und den Schleifkontakten 7 empfindlich gegen Querbelastungen sind. Derartige Querbelastungen, die beispielsweise zum Abbrechen der Schleifkontakte 7 oder zu Fehlkontaktierungen der Schleifkontakte 7 in den Leitungssträngen 6 führen können, werden somit vermieden.

Um bei einer Fahrt des Krans 2 entgegen der Fahrrichtung F die auf die Schleifleitung 5 und die Führungsschiene 9 ausgeübten Querkräfte entsprechend zu minimieren, kann zwischen dem in Fig. 1 rechten und in Fahrtrichtung F hinteren Ende des Krans 2 und dem zweiten Ende des zweiten Antriebshebelarms 13R eine weitere als Seil ausgebildete Feststellvorrichtung für den zweiten Antriebshebelarm 13L befestigt sein. Die Funktion dieses rechten Seils entspricht der oben beschriebenen Funktion des linken Seils 16, allerdings für eine Fahrt des Krans 2 entgegen der Fahrtrichtung F.

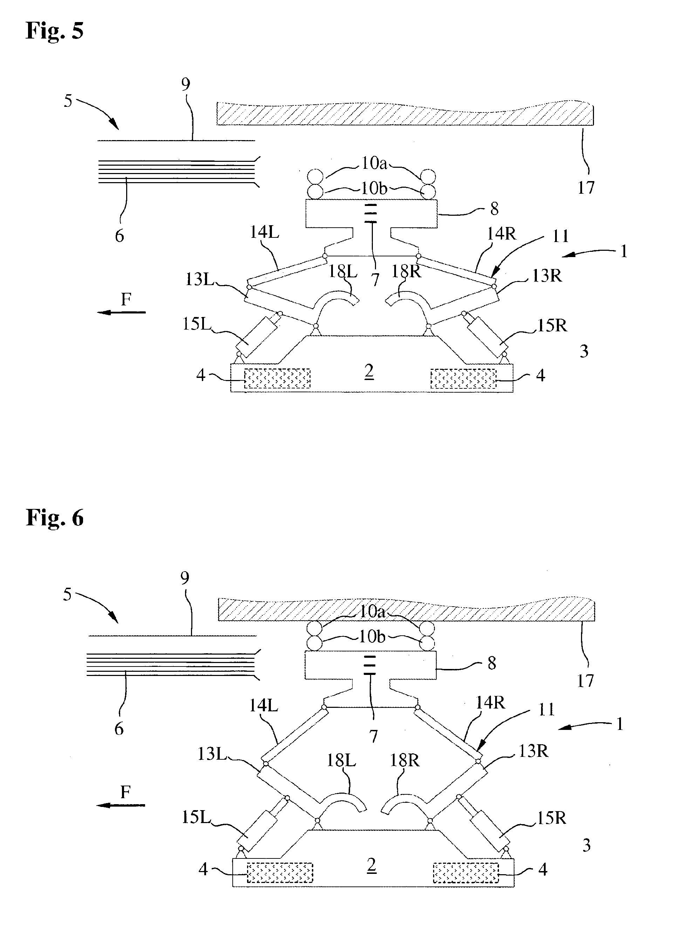

In den Fig. 5 bis 8 ist eine schematische Draufsicht auf eine zweite Ausführung eines erfindungsgemäßes Energieübertragungssystems mit einem erfindungsgemäßen Stromabnehmer 8 gezeigt, welche sich im Wesentlichen durch die Ausbildung der Feststellvorrichtung von der in Fig. 1 bis 4 gezeigten Ausführung unterscheidet. Im nachfolgenden werden deshalb gleiche Teile mit gleichen Bezugszeichen bezeichnet und im Wesentlichen die Unterscheide erläutert.

Bei dem in Fig. 5 dargestellten Ausführungsbeispiel ist an dem am Kran 2 angelenkten ersten Ende des ersten Antriebshebelarms 13L ein Anschlag 18L in Form eines kreisringabschnittsförmigem Arm vorgesehen. Der Anschlag 18L schlägt beim Losfahren des Krans 2 in Fahrtrichtung F bei drucklos geschaltetem Pneumatikzylinder 15L bei dem in Fig. 7 gezeigten Winkel der Drehbewegung des ersten Antriebshebelarms 13L am Kran 2 an, legt also die Position des ersten Antriebshebelarms 13L fest. Hierdurch stellt sich wieder der gewünschte Winkel α zwischen der Führungsschiene 9 und dem erstem Zughebelarm 14L ein, der wiederum vor allem als Zugübertragungsmittel dient.

Entsprechend kann für das Fahren entgegen der Fahrtrichtung F auch ein zweiter, rechter Anschlag 18R vorgesehen werden. Anstelle des armförmigen Anschlags 18L, 18R kann der Anschlag auch anders ausgebildet sein, beispielsweise in Form eines Anschlagstücks zwischen Kran 2 und dem unteren Ende des ersten bzw. zweiten Antriebshebelarm 13L, 13R, wie in Fig. 7 gepunktet angedeutet.

Auch diese erfindungsgemäße Ausbildung des Stromabnehmers und des Energieübertragungssystems ermöglichen es, nach dem Einfädeln der Führungsrollen 10a, 10b in die Führungsschiene 9 die Pneumatikzylinder 15L, 15R drucklos zu schalten, so dass während des Verfahrens nicht ständig zusätzliche Energie aufgebracht werden muss. Der Stromabnehmerwagen wird vor allem entlang der Führungsschiene 9 gezogen, so dass die auftretenden Querkräfte minimiert werden können.

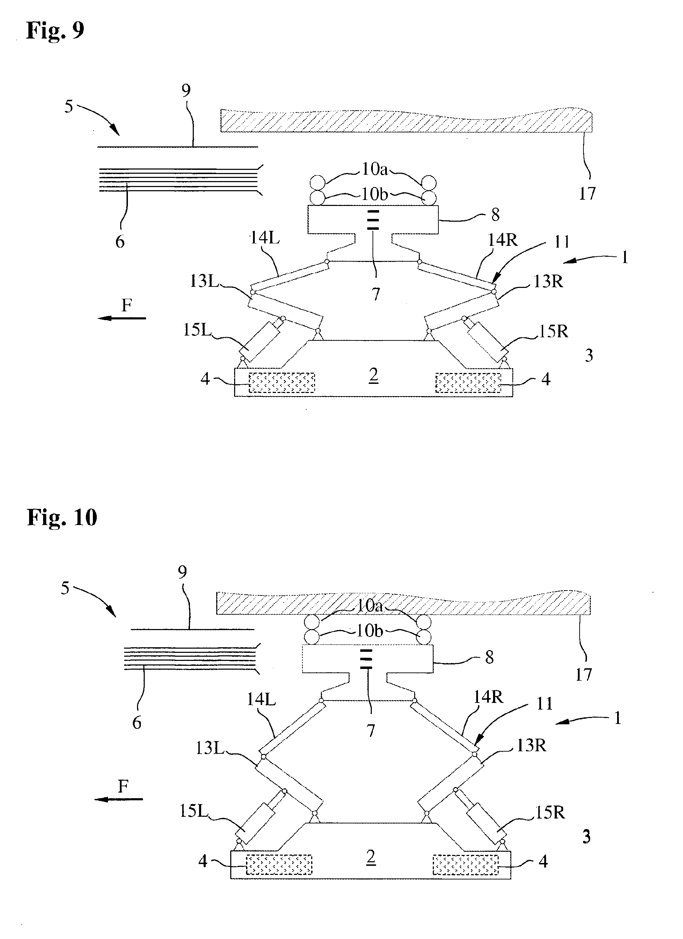

Die in Fig. 9 bis 12 gezeigte alternative Ausbildung der Erfindung unterscheidet sich wiederum im Wesentlichen durch die Ausbildung der Feststellvorrichtung von den in Fig. 1 bis 8 gezeigten Ausführungen. Im nachfolgenden werden deshalb gleiche Teile mit gleichen Bezugszeichen bezeichnet und im Wesentlichen die Unterscheide erläutert.

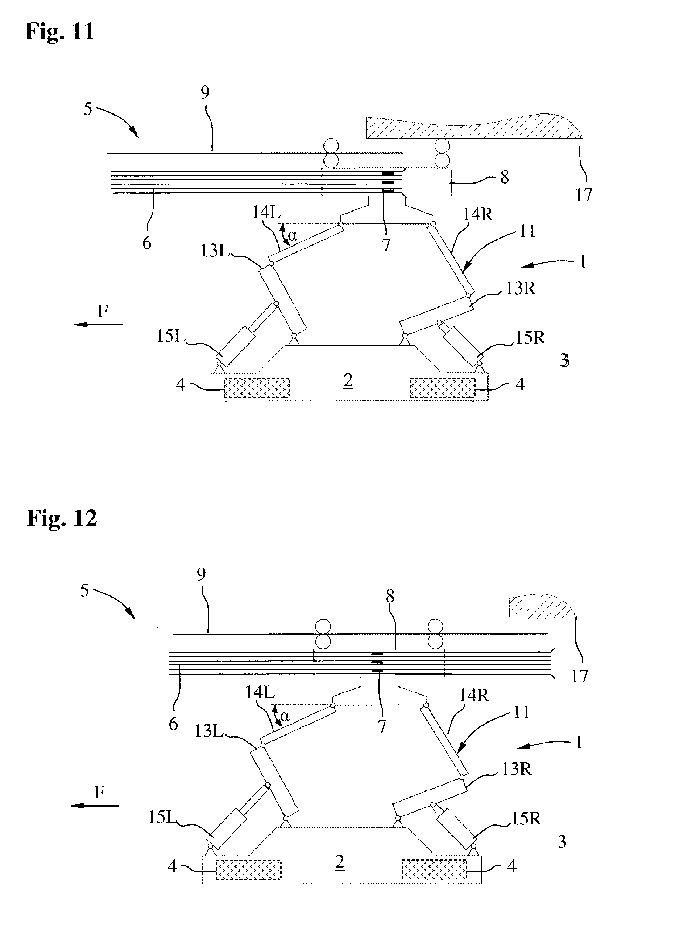

Bei der in Fig. 9 bis 12 gezeigten Ausführung der Erfindung wird die Feststellvorrichtung dadurch bereitgestellt, dass der Pneumatikzylinder 15L des in Fahrtrichtung F ersten Antriebshebelarms 13L in der in Fig. 11 gezeigten Stellung festgestellt wird. Der zweite, in Fahrtrichtung hintere Pneumatikzylinder 15R wird demgegenüber drucklos geschaltet, so dass auch hier der vordere erste Antriebshebelarm 13L feststeht und der linke, erste Zughebelarm 14L im wesentlichen Zugkräfte auf den Stromabnehmerwagen 8 überträgt. Dieser wird auch hier wieder m wesentlichen entlang der Führungsschiene 9 gezogen, während kaum Querkräfte auf ihn ausgeübt werden. Beim Fahren des Krans 2 entgegen der Fahrtrichtung F wird hier in umgekehrter Weise der zweite Pneumatikzylinder 15R in einer entsprechenden Stellung festgestellt, während der erste Pneumatikzylinder 15L drucklos geschaltet wird.

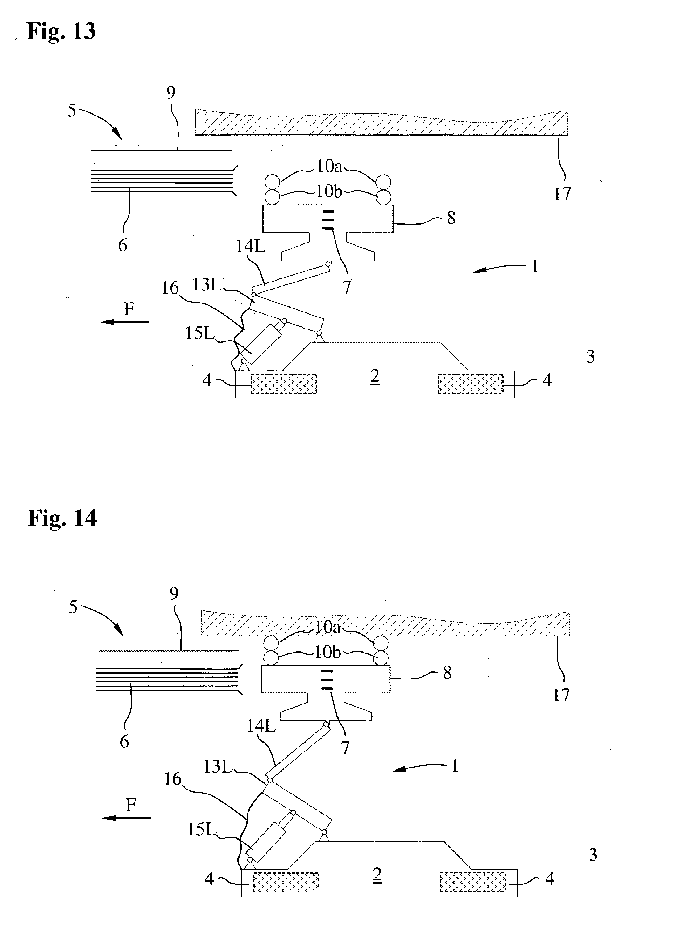

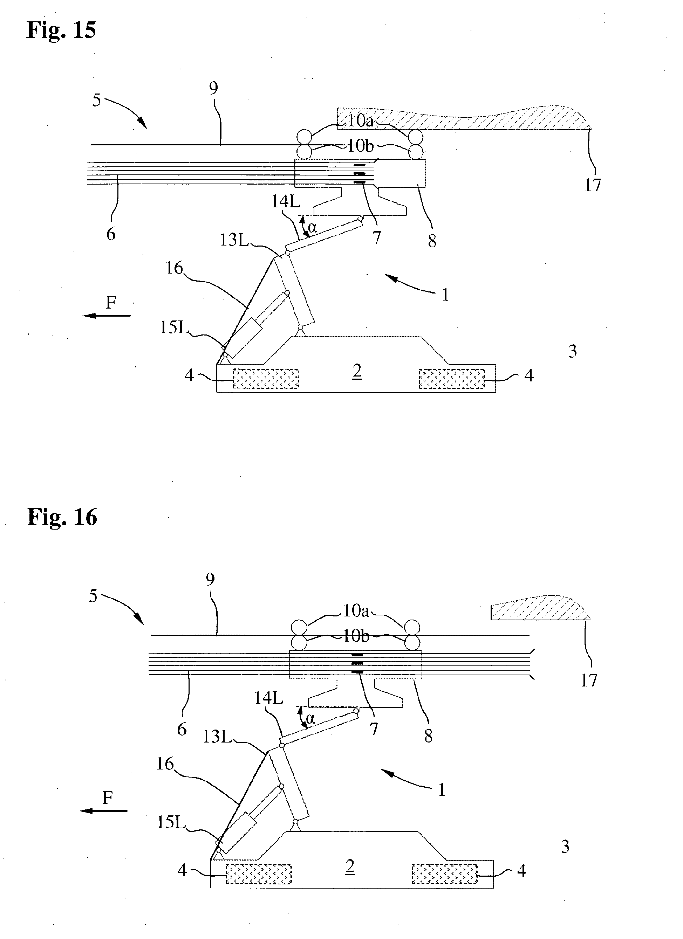

Die in Fig. 13 bis 16 gezeigte Ausführung der Erfindung unterscheidet sich von der Ausführung nach Fig. 1 bis 4 dadurch, dass hier lediglich die linke, erste Hebelanordnung 12L vorgesehen ist, während die in Fig. 1 bis 4 gezeigte rechte, zweite Hebelanordnung 12R weggelassen wurde. Die Funktionsweise entspricht auch hier der Funktionsweise der Ausführung nach Fig. 1 bis 4, wobei hier die Hebelanordnung 12L zusätzlich so mit einer Haltevorrichtung ausgebildet ist, dass der Stromabnehmerwagen 8 im wesentlichen parallel zur Führungsschiene 9 quer zur Fahrtrichtung F zwischen der in Fig. 13 gezeigten eingefahrenen Position und der in Fig. 16 gezeigten ausgefahrenen Position bewegt werden kann. Derartige Haltevorrichtungen sind aus dem Stand der Technik bereits bekannt. Auch bei dieser Ausführung kann die Feststellvorrichtung als Seil 16, als Anschlag wie in Fig. 5 bis 8 oder durch den Pneumatikzylinder 15L wie in Fig. 9 bis 12 gebildet sein.

In einer weiteren alternativen Ausgestaltung der Erfindung kann anstelle des einen Pneumatikzylinders 15L oder der zwei Pneumatikzylinder 15L, 15R nur ein Verstellantrieb vorgesehen werden, der zwischen Stromabnehmerwagen 8 und Kran 2 angeordnet ist. Dieser Verstellantrieb sorgt für das Ein- und Ausfahren des Stromabnehmerwagen 8 und wird bei Erreichen der ausgefahrenen Position des Stromabnehmerwagens 8 an der Anschlagsfläche 17 drucklos geschaltet, so dass eine der oben beschriebenen Feststellvorrichtungen je nach Fahren des Krans 2 in oder entgegen Fahrtrichtung F wieder den ersten oder zweiten Antriebshebelarm 13L, 13R feststellt.

Die oben beschriebenen unterschiedlichen Arten der Feststellvorrichtung können auch untereinander kombiniert werden, so kann beispielsweise ein Seil 16 an der ersten Hebelanordnung 12L und ein Anschlag 18R an der zweiten Hebelanordnung 12R vorgesehen werden.

## Patentansprüche

1. Stromabnehmer (1) für eine in und entgegen einer Fahrtrichtung (F) entlang einer Schleifleitung (5) verfahrbare Vorrichtung (2), mit einem Stromabnehmerwagen (8) zum geführten Verfahren entlang eines Führungselements (9) der Schleifleitung (5), mit mindestens einer ersten Hebelanordnung (12L) zwischen Stromabnehmerwagen (8) und verfahrbarer Vorrichtung (2) mit einem ersten Antriebshebelarm (13L), dessen erstes Ende drehbar mit der verfahrbaren Vorrichtung (2) verbindbar und dessen zweites Ende drehbar mit einem zweiten Ende mindestens eines ersten Zughebelarms (14L) verbunden ist, dessen erstes Ende drehbar mit dem Stromabnehmerwagen (8) verbunden ist, wobei ein erster Verstellantrieb (15L) vorgesehen ist, um den Stromabnehmerwagen (8) zwischen einer eingefahrenen Position an der verfahrbaren Vorrichtung (2) und einer ausgefahrenen Position entfernt der verfahrbaren Vorrichtung (2) bewegen zu können, **dadurch gekennzeichnet, dass** eine erste Feststellvorrichtung (16; 18L; 15L) vorgesehen ist, um den ersten Antriebshebelarm (13L) beim Verfahren der verfahrbaren Vorrichtung (2) in Fahrtrichtung (F) in einer vorgegebenen ausgefahrenen Position festzustellen.

2. Stromabnehmer (1) nach Anspruch 1, **dadurch gekennzeichnet, dass** der erste Verstellantrieb (15L) zwischen der verfahrbarer Vorrichtung (2) und dem Stromabnehmerwagen (8) angeordnet ist.

3. Stromabnehmer (1) nach Anspruch 1, **dadurch gekennzeichnet, dass** der erste Verstellantrieb (15L) zwischen der verfahrbaren Vorrichtung (2) und dem erstem Antriebshebelarm (13L) oder dem ersten Zughebelarm (14L) angeordnet ist.

4. Stromabnehmer (1) nach einem der voranstehenden Ansprüche, **dadurch gekennzeichnet, dass** eine zweite Hebelanordnung (12R) mit einem zweiten Antriebshebelarm (13R), dessen erstes Ende drehbar mit der verfahrbaren Vorrichtung (2) verbindbar und dessen zweites Ende drehbar mit einem zweiten Ende mindestens eines zweiten Zughebelarms (14R) verbunden ist, dessen zweites Ende drehbar mit dem Stromabnehmerwagen (8) verbunden ist, wobei die erste Hebelanordnung (12L) und die zweite Hebelanordnung (12R) in einer Pantographenanordnung (11) zueinander angeordnet sind.

5. Stromabnehmer (1) nach Anspruch 4, **dadurch gekennzeichnet, dass** eine zweite Feststellvorrichtung (18R; 15R) vorgesehen ist, um den zweiten Antriebshebelarm (13R) beim Verfahren der Vorrichtung (2) entgegen der Fahrtrichtung (F) in einer vorgegebenen ausgefahrenen Position festzustellen.

6. Stromabnehmer (1) nach Anspruch 4 oder 5, **dadurch gekennzeichnet, dass** ein zweiter Verstellantrieb (15R) zwischen der verfahrbaren Vorrichtung (2) und dem zweiten Antriebshebelarm (13R) oder dem zweiten Zughebelarm (14L) angeordnet ist.

7. Stromabnehmer (1) nach Anspruch 4 oder 5, **dadurch gekennzeichnet, dass** der erste Verstellantrieb (15L) oder der zweite Verstellantrieb (15R) zwischen dem ersten Antriebshebelarm (13L) und dem zweiten Antriebshebelarm (13R) angeordnet ist.

8. Stromabnehmer (1) nach einem der voranstehenden Ansprüche, **dadurch gekennzeichnet, dass** der erste und/oder der zweite Verstellantrieb (15L, 15R) Pneumatikzylinder und/oder Hydraulikzylinder sind.

9. Stromabnehmer (1) nach Anspruch 8, **dadurch gekennzeichnet, dass** der oder die Pneumatik- und/oder Hydraulikzylinder als Feststellvorrichtung (15L, 15R) ausgebildet ist.

10. Stromabnehmer (1) nach einem der Ansprüche 1 bis 8, **dadurch gekennzeichnet, dass** als erste Feststellvorrichtung ein an der verfahrbaren Vorrichtung (2) und am ersten Antriebshebelarm (13L) angeordnetes erstes flexibles Zugelement (16) vorgesehen ist, welches bei ausgefahrenem ersten Antriebshebelarm (13L) und Verfahren des Stromabnehmers (1) in Fahrtrichtung (F) gespannt wird.

11. Stromabnehmer (1) nach Anspruch 10 **dadurch gekennzeichnet, dass** als zweite Feststellvorrichtung ein an der verfahrbaren Vorrichtung (2) und am zweiten Antriebshebelarm (13R) angeordnetes zweites flexibles Zugelement vorgesehen ist, welches bei ausgefahrenem zweiten Antriebshebelarm (13L) und Verfahren des Stromabnehmers (1) entgegen der Fahrtrichtung (F) gespannt wird.

12. Stromabnehmer (1) nach einem der Ansprüche 1 bis 8, **dadurch gekennzeichnet, dass** als erste und/oder zweite Feststellvorrichtung ein am ersten Antriebshebelarm (13L) angeordneter erster Anschlag (18L) und/oder ein am zweiten Antriebshebelarm (13R) angeordneter zweiter Anschlag (18R) vorgesehen sind, der oder die beim Erreichen der vorgegebenen ausgefahrenen Position des jeweiligen Antriebshebelarms (13L; 13R) an der verfahrbaren Vorrichtung (2) anschlagen.

13. Energieübertragungssystem mit einer Schleifleitung (5), einer entlang der Schleifleitung (5) in und entgegen einer Fahrtrichtung (F) verfahrbaren Vorrichtung (2) und einem Stromabnehmer (1) mit einem Stromabnehmerwagen (8) zum geführten Verfahren entlang eines Führungselements (9) der Schleifleitung (5), mit mindestens einer ersten Hebelanordnung (12L) zwischen Stromabnehmerwagen (8) und verfahrbarer Vorrichtung (2) mit einem ersten Antriebshebelarm (13L), dessen erstes Ende drehbar mit der verfahrbaren Vorrichtung (2) verbindbar und dessen zweites Ende drehbar mit einem zweiten Ende mindestens eines ersten Zughebelarms (14L) verbunden ist, dessen erstes Ende drehbar mit dem Stromabnehmerwagen (8) verbunden ist, wobei ein erster Verstellantrieb (15L) vorgesehen ist, um den Stromabnehmerwagen (8) zwischen einer eingefahrenen Position an der verfahrbaren Vorrichtung (2) und einer ausgefahrenen Position entfernt der verfahrbaren Vorrichtung (2) bewegen zu können, **dadurch gekennzeichnet, dass** eine erste Feststellvorrichtung (16; 18L; 15L) vorgesehen ist, um den ersten Antriebshebelarm (13L) beim Verfahren der verfahrbaren Vorrichtung (2) in Fahrtrichtung (F) in einer vorgegebenen ausgefahrenen Position festzustellen.

14. Energieübertragungssystem nach Anspruch 13, **dadurch gekennzeichnet, dass** der Stromabnehmer (1) nach einem der Ansprüche 1 bis 12 ausgebildet ist.

## Claims

1. Current collector (1) for a device (2) which can travel along a contact line (5) in a direction of travel (F) and in the opposite direction, with a current collector carriage (8) for guided travel along a guide element (9) of the contact line (5), with at least one first lever arrangement (12L) between the current collector carriage (8) and the travelling device (2) with a first driving lever arm (13L), the first end of which can be connected rotatably to the travelling device (2) and the second end of which is connected rotatably to a second end of at least one first traction lever arm (14L), the first end of which is connected rotatably to the current collector carriage (8), wherein a first adjusting drive (15L) is provided in order to be able to move the current collector carriage (8) between a retracted position on the travelling device (2) and an extended position away from the travelling device (2), **characterised in that** a first locking device (16; 18L; 15L) is provided in order to lock the first driving lever arm (13L) in a predetermined extended position when the travelling device (2) is travelling in the direction of travel (F).

2. Current collector (1) according to claim 1, **characterised in that** the first adjusting drive (15L) is arranged between the travelling device (2) and the current collector carriage (8).

3. Current collector (1) according to claim 1, **characterised in that** the first adjusting drive (15L) is arranged between the travelling device (2) and the first driving lever arm (13L) or the first traction lever arm (14L).

4. Current collector (1) according to one of the preceding claims, **characterised in that** a second lever arrangement (12R) is provided with a second driving lever arm (13R), the first end of which can be connected rotatably to the travelling device (2) and the second end of which is connected rotatably to a second end of at least one second traction lever arm (14R), the second end of which is connected rotatably to the current collector carriage (8), wherein the first lever arrangement (12L) and the second lever arrangement (12R) are arranged relative to one another in a pantograph arrangement (11).

5. Current collector (1) according to claim 4, **characterised in that** a second locking device (18R; 15R) is provided in order to lock the second driving lever arm (13R) in a predetermined extended position when the device (2) is travelling in the opposite direction to the direction of travel (F).

6. Current collector (1) according to claim 4 or 5, **characterised in that** a second adjusting drive (15R) is arranged between the travelling device (2) and the second driving lever arm (13R) or the second traction lever arm (14L).

7. Current collector (1) according to claim 4 or 5, **characterised in that** the first adjusting drive (15L) or the second adjusting drive (15R) is arranged between the first driving lever arm (13L) and the second driving lever arm (13R).

8. Current collector (1) according to one of the preceding claims, **characterised in that** the first and/or the second adjusting drives (15L, 15R) are pneumatic cylinders and/or hydraulic cylinders.

9. Current collector (1) according to claim 8, **characterised in that** the pneumatic and/or hydraulic cylinder or cylinders are embodied as a locking device (15L, 15R).

10. Current collector (1) according to one of claims 1 to 8, **characterised in that** provided as first locking device there is a first flexible traction element (16) which is arranged on the travelling device (2) and on the first driving lever arm (13L) and is tensioned when the first driving lever arm (13L) is extended and the current collector (1) is travelling in the direction of travel (F).

11. Current collector (1) according to claim 10, **characterised in that** provided as second locking device there is a second flexible traction element which is arranged on the travelling device (2) and on the second driving lever arm (13R) and is tensioned when the second driving lever arm (13L) is extended and the current collector (1) is travelling in the opposite direction to the direction of travel (F).

12. Current collector (1) according to one of claims 1 to 8, **characterised in that** provided as first and/or second locking device there is/are a first stop (18L) arranged on the first driving lever arm (13L) and/or a second stop (18R) arranged on the second driving lever arm (13R) which bears or bear on the travelling device (2) when the respective driving lever arm (13L; 13R) reaches the predetermined extended position.

13. Energy transmission system with a contact line (5), a device (2) which can travel along the contact line (5) in a direction of travel (F) and in the opposite direction, and a current collector (1) with a current collector carriage (8) for guided travel along a guide element (9) of the contact line (5), with at least one first lever arrangement (12L) between the current collector carriage (8) and the travelling device (2) with a first driving lever arm (13L), the first end of which can be connected rotatably to the travelling device (2) and the second end of which is connected rotatably to a second end of at least one first traction lever arm (14L), the first end of which is connected rotatably to the current collector carriage (8), wherein a first adjusting drive (15L) is provided in order to be able to move the current collector carriage (8) between a retracted position on the travelling device (2) and an extended position away from the travelling device (2), **characterised in that** a first locking device (16; 18L; 15L) is provided in order to lock the first driving lever arm (13L) in a predetermined extended position when the travelling device (2) is travelling in the direction of travel (F).

14. Energy transmission system according to claim 13, **characterised in that** the current collector (1) is embodied according to one of claims 1 to 12.

## Revendications

1. Collecteur de courant (1) pour un dispositif (2) pouvant être déplacé le long d'une ligne de contact (5) dans le sens de déplacement (F) ou dans le sens opposé à ce dernier, comportant un trolley pour collecteur de courant (8) destiné à être déplacé de manière guidée le long d'un élément de guidage (9) de la ligne de contact (5), comportant au moins un premier ensemble de leviers (12L), entre le trolley pour collecteur de courant (8) et le dispositif (2) pouvant être déplacé, doté d'un premier bras de levier d'entraînement (13L), dont la première extrémité peut être reliée de manière rotative au dispositif (2) pouvant être déplacé et dont la deuxième extrémité est reliée de manière rotative à une deuxième extrémité au moins d'un premier bras de levier de traction (14L), dont la première extrémité est reliée de manière rotative au trolley pour collecteur de courant (8), sachant qu'un premier entraînement de déplacement (15L) est prévu afin de pouvoir déplacer le trolley pour collecteur de courant (8) entre une position rentrée sur le dispositif (2) pouvant être déplacé et une position sortie à distance du dispositif (2) pouvant être déplacé, **caractérisé en ce qu'**un premier dispositif d'immobilisation (16 ; 18L ; 15L) est prévu afin d'immobiliser le premier bras de levier d'entraînement (13L) dans une position sortie prédéfinie lors du déplacement du dispositif (2) pouvant être déplacé dans le sens de déplacement (F).

2. Collecteur de courant (1) selon la revendication 1, **caractérisé en ce que** le premier entraînement de déplacement (15L) est disposé entre le dispositif (2) pouvant être déplacé et le trolley pour collecteur de courant (8).

3. Collecteur de courant (1) selon la revendication 1, **caractérisé en ce que** le premier entraînement de déplacement (15L) est disposé entre le dispositif (2) pouvant être déplacé et le premier bras de levier d'entraînement (13L) ou le premier bras de levier de traction (14L).

4. Collecteur de courant (1) selon l'une quelconque des revendications précédentes, **caractérisé par** un deuxième ensemble de leviers (12R) doté d'un deuxième bras de levier d'entraînement (13R), dont la première extrémité peut être reliée de manière rotative au dispositif (2) pouvant être déplacé et dont la deuxième extrémité est reliée de manière rotative à une deuxième extrémité au moins d'un deuxième bras de levier de traction (14R), dont la deuxième extrémité est reliée de manière rotative au trolley pour collecteur de courant (8), sachant que le premier ensemble de leviers (12L) et le deuxième ensemble de leviers (12R) sont disposés l'un par rapport à l'autre selon un agencement de pantographe (11).

5. Collecteur de courant (1) selon la revendication 4, **caractérisé en ce qu'**un deuxième dispositif d'immobilisation (18R ; 15R) est prévu, afin d'immobiliser le deuxième bras de levier d'entraînement (13R) dans une position sortie prédéfinie lors du déplacement du dispositif (2) dans le sens opposé au sens de déplacement (F).

6. Collecteur de courant (1) selon la revendication 4 ou 5, **caractérisé en ce qu'**un deuxième entraînement de déplacement (15R) est disposé entre le dispositif (2) pouvant être déplacé et le deuxième bras de levier d'entraînement (13R) ou le deuxième bras de levier de traction (14L).

7. Collecteur de courant (1) selon la revendication 4 ou 5, **caractérisé en ce que** le premier entraînement de déplacement (15L) ou le deuxième entraînement de déplacement (15R) est disposé entre le premier bras de levier d'entraînement (13L) et le deuxième bras de levier d'entraînement (13R).

8. Collecteur de courant (1) selon l'une quelconque des revendications précédentes, **caractérisé en ce que** le premier et/ou le deuxième entraînement de déplacement (15L, 15R) sont des vérins pneumatiques et/ou des vérins hydrauliques.

9. Collecteur de courant (1) selon la revendication 8, **caractérisé en ce que** le ou les vérins pneumatiques et/ou hydrauliques sont réalisés sous la forme d'un dispositif d'immobilisation (15L, 15R).

10. Collecteur de courant (1) selon l'une quelconque des revendications 1 à 8, **caractérisé en ce qu'**on prévoit comme premier dispositif d'immobilisation un premier élément de traction (16) flexible disposé sur le dispositif (2) pouvant être déplacé et sur le premier bras de levier d'entraînement (13L), lequel élément de traction est tendu lorsque le premier bras de levier d'entraînement (13L) est sorti et lorsque le collecteur de courant (1) est déplacé dans le sens de déplacement (F).

11. Collecteur de courant (1) selon la revendication 10, **caractérisé en ce qu'**on prévoit comme deuxième dispositif d'immobilisation un deuxième élément de traction flexible disposé sur le dispositif (2) pouvant être déplacé et sur le deuxième bras de levier d'entraînement (13R), lequel deuxième élément de traction est tendu lorsque le deuxième bras de levier d'entraînement (13L) est sorti et lorsque le collecteur de courant (1) est déplacé dans le sens opposé au sens de déplacement (F).

12. Collecteur de courant (1) selon l'une quelconque des revendications 1 à 8, **caractérisé en ce que** sont prévues comme premier et/ou deuxième dispositif d'immobilisation une première butée (18L) disposée sur le premier bras de levier d'entraînement (13L) et/ou une deuxième butée (18R) disposée sur le deuxième bras de levier d'entraînement (13R), lesquelles butent contre le dispositif (2) pouvant être déplacé lorsque la position sortie prédéfinie du bras de levier d'entraînement respectif (13L ; 13R) est atteinte.

13. Système de transmission d'énergie comportant une ligne de contact (5), un dispositif (2) pouvant être déplacé le long de la ligne de contact (5) dans le sens de déplacement (F) et dans le sens opposé à ce dernier, et un collecteur de courant (1) doté d'un trolley pour collecteur de courant (8) destiné à être déplacé de manière guidée le long d'un élément de guidage (9) de la ligne de contact (5), comportant au moins un premier ensemble de leviers (12L), entre le trolley pour collecteur de courant (8) et le dispositif (2) pouvant être déplacé, doté d'un premier bras de levier d'entraînement (13L), dont la première extrémité peut être reliée de manière rotative au dispositif (2) pouvant être déplacé et dont la deuxième extrémité est reliée de manière rotative à une deuxième extrémité au moins d'un premier bras de levier de traction (14L), dont la première extrémité est reliée de manière rotative au trolley pour collecteur de courant (8), sachant qu'un premier entraînement de déplacement (15L) est prévu afin de pouvoir déplacer le trolley pour collecteur de courant (8) entre une position rentrée sur le dispositif (2) pouvant être déplacé et une position sortie à distance du dispositif (2) pouvant être déplacé, **caractérisé en ce qu'**un premier dispositif d'immobilisation (16 ; 18L ; 15L) est prévu afin d'immobiliser le premier bras de levier d'entraînement (13L) dans une position sortie prédéfinie lorsque le dispositif (2) pouvant être déplacé est déplacé dans le sens de déplacement (F).

14. Système de transmission d'énergie selon la revendication 13, **caractérisé en ce que** le collecteur de courant (1) est réalisé selon l'une quelconque des revendications 1 à 12.
